Europäisches Patentamt

European Patent Office

Office européen des brevets

(11) Publication number: 0 648 825 A1

# EUROPEAN PATENT APPLICATION

(21) Application number: 94116271.1

(22) Date of filing: 14.10.94

(51) Int. Cl.6: C09K 5/04

(30) Priority: 15.10.93 JP 280646/93

(43) Date of publication of application:
19.04.95 Bulletin 95/16

(84) Designated Contracting States:
CH DE FR GB IT LI NL SE

(71) Applicant: Oho, Suk Jae
141-66, Kaibong-dong
Kuro-ku,
Seoul (KR)
Applicant: Sato, Eiichi
802-8, Nagamine-machi

Kumamoto-shi,
Kumamoto (JP)

(72) Inventor: Oho, Suk Jae
141-66, Kaibong-dong,
Kuro-ku
Seoul (KR)

(74) Representative: TER MEER - MÜLLER -
STEINMEISTER & PARTNER
Mauerkircherstrasse 45
D-81679 München (DE)

(54) Refrigerant composition and method of producing the same.

(57) A non-azeotropic refrigerant composition which can be used in refrigerators originally designed to use a Freon refrigerant without the need of changing the specifications thereof and which is harmless to men and environment. The refrigerant composition consists essentially of nitrogen, water, a freezing-point depressant (NaCl), a phosphate, and a polyhydric alcohol. In production, a stirring tank (1) is evacuated to produce a vacuum therein. Sodium chloride and pure water are mixed together to prepare an aqueous sodium chloride solution. Further, trisodium phosphate is dissolved in the aqueous solution to prepare an aqueous sodium chloride and trisodium phosphate solution, which is then stored in a tank (20). The aqueous sodium chloride and trisodium phosphate solution, ethylene glycol and propylene glycol are injected into the stirring tank (1), and the mixture is stirred. In addition, liquid nitrogen is injected into the stirring tank (1) little by little, and a motor (4) is activated to drive a stirring element (2), thereby stirring the mixture.

FIG.1

The present invention relates to a refrigerant composition used in refrigerators or other similar machines and also relates to a method of producing the refrigerant composition. More particularly, the present invention relates to a refrigerant composition containing at least nitrogen, water, and a freezing-point depressant for depressing the freezing point of water, and also relates to a method of producing such a refrigerant composition.

A typical refrigerator has a compressor, a condenser, an evaporator, a receiver, an oil separator, an accumulator, etc., which constitute a refrigerating cycle. The purpose of the refrigerator is to absorb heat from a low-temperature heat source and to release the heat where the temperature is relatively high, which resembles the use of a pump to raise water to a higher place. Therefore, the refrigerator is also called "heat pump". Meantime, when the purpose of the refrigerator is to release heat into a high-temperature heat source so as to use it for heating, the system is also called "heat pump air conditioning unit". A refrigerant used in the refrigerating cycle is evaporated at low temperature in the evaporator to form a high-temperature, high-pressure gas, which is then cooled in the condenser to return to a liquid refrigerant. In this way, the refrigerant circulates in the refrigerator, thereby continuously performing a refrigerating operation. Typical examples of refrigerants used for this purpose include ammonia, carbon dioxide gas, chlorofluorohydrocarbon (hereinafter occasionally referred to as "CFC") gases, that is, Freon (Flon) gases (i.e., fluorine-containing carbonized compounds) such as R-11, R-12, R-13, R-21, R-22, R-113, R-114, R-500 and R-502, propane, etc.

CFC gases, that is, Freon gases, and ammonia are mainly used as refrigerants. Freon gases are also used as an azeotropic refrigerant which is formed by mixing together two different kinds of Freon gas but functions as if it were comprised of only one kind of Freon gas. However, ammonia is a toxic, combustible and explosive gas although it is excellent in refrigerant characteristics such as refrigerating capacity. Moreover, ammonia corrodes copper and a copper alloy when air and water content get mixed in it.

In contrast, Freon refrigerants are excellent in refrigerant characteristics such as refrigerating capacity as well as non-combustible and non-explosive, and they are neither corrosive with respect to metals nor toxic to the human body. Accordingly, Freon gases are superior refrigerants. However, since it became clear that Freon gases destroy ozone ($O_3$) in the stratosphere, specific Freons, i.e., R-11, R-12, R-113, R-114 and R-115, have become subject to regulations. R-12 is mainly used in relatively small-sized refrigerating machines such as automobile air conditioners and domestic refrigerators. R-22 (hereinafter occasionally referred to as "HCFC" Freon) is used in medium- and large-sized compressors because the refrigerating capacity per unit volume is larger than that of R-12.

It is said that the "HCFC" Freon will also become subject to regulations. R-113 and R-114 are mainly used in turbo-refrigerators. A mixture of Freon gases, for example, R-115 and R-22, is used as a refrigerant for low-temperature use application in the form of azeotropic refrigerant R-502. In time, R-22 and other Freons may also become subject to regulations in addition to the above-described Freons. In such a case, all the Freons and Freon-containing azeotropic refrigerants will become unusable.

When water gets mixed in a Freon liquid, since water is only slightly soluble in the Freon liquid, it forms water drops in the Freon liquid, and these water drops freeze. In such a case, the resulting ice may clog the expansion valve and make it impossible for the refrigerant to pass through it, causing a reduction of the refrigerating capacity or other trouble. Accordingly, Freon refrigerators must avoid water, and it is therefore necessary to conduct vacuum drying perfectly before refrigerant charge. Furthermore, when air and water get mixed in a Freon refrigerant, hydrofluoric acid is formed, causing corrosion of the compressor, pipes, etc. Therefore, it is also necessary to use a dryer, e.g., silica gel. Thus, the conventional refrigerants for Freon refrigerators must avoid water as much as possible.

In refrigerators, a refrigerating machine oil is used as a lubricant for protecting the compressor and other constituent elements from wear. It is desirable to use a refrigerating machine oil which does not lose its lubricating properties even at low temperature and which can stably coexist with a refrigerant. In the case of a Freon refrigerant, the liquid refrigerant and the refrigerating machine oil are soluble in each other up to a certain temperature. A Freon refrigerator is designed so that the refrigerating machine oil is discharged from the compressor and returned to the crank case thereof after circulating through the system. Thus, the refrigerator is capable of automatic operation. When a compressor that needs a large amount of refrigerating machine oil is used, or when the refrigerant piping distance is long, an oil separator is used. Refrigerators that use ammonia are all equipped with an oil separator because oil and ammonia are incompatible with each other.

Under these circumstances, various Freon substitutes have been proposed. However, many of these proposals are concerned with substitute Freons for "HCFC" Freons such as R-22, R-123, etc., which are not subject to regulations for the moment, and azeotropic refrigerants formed by mixing together these substitute Freons. Accordingly, none of the Freon substitutes have characteristics adequate to completely substitute for the existing Freon refrigerants. There have been proposed domestic refrigerators that use a non-azeotropic refrigerant other than Freon, for example, propane. However, this type of refrigerator involves problems in terms of combustibility and explosiveness. Furthermore, propane cannot be used for refrigerators that are originally designed to use Freon refrigerants, such as the existing domestic refrigerators and automobile air conditioners. That is, the new refrigerants do not match this type of refrigerator in terms of the capacity of the compressor used in the refrigerator, i.e., the compression efficiency, and power required to operate the compressor.

Accordingly, to use these newly proposed refrigerants, the basic design of the compressor and other constituent elements of the refrigerator must be changed. The design change causes the cost to increase exceedingly, resulting in a waste of resources. It would cost immeasurably to dispose of the existing automobile air conditioners and refrigerators that use Freon refrigerants and of production facilities for these refrigerating machines or to change the production facilities.

The present invention has been made on the basis of the above-described technical background, and aims at attaining the following objects.

It is an object of the present invention to provide a non-azeotropic refrigerant composition as a substitute for Freon refrigerants, and also provide a method of producing the refrigerant composition.

It is another object of the present invention to provide a refrigerant composition which can be used in a refrigerator that is originally designed to use a Freon refrigerant without design change of the refrigerator structure, and also provide a method of producing the refrigerant composition.

It is still another object of the present invention to provide a refrigerant composition which is harmless to men and terrestrial environment, and also provide a method of producing the refrigerant composition.

To attain the above-described objects, the present invention provides the following refrigerant compositions and methods of producing the same:

The first refrigerant composition is a refrigerant composition used in a refrigerator having a compressor, a condenser, a receiver, an expansion valve, an evaporator, etc. The first refrigerant composition consists essentially of at least one refrigerant gas selected from among nitrogen, argon, oxygen, and carbon dioxide, which are gaseous at ordinary temperatures, water, and a freezing-point depressant for depressing the freezing point of the water by mixing with it.

The above-described refrigerator may have any type of existing compressor, e.g., a reciprocating compressor, a rotary compressor, a screw compressor, a scroll compressor, etc., as long as the compressor is used with a Freon refrigerant and of the positive displacement type. In particular, the refrigerant composition of the present invention can effectively be applied to a refrigerator that is originally designed to use a Freon refrigerant without the need of changing the specifications of the compressor and other constituent elements of the refrigerator.

The refrigerant composition of the present invention can be used in any type of refrigerator that has an oil separator, an accumulator, a four-way valve, etc. in addition to the above-mentioned constituent elements. It is preferable for the refrigerator to have these devices. Since water and a refrigerating machine oil are not soluble in each other, the refrigerator preferably uses an oil separator. It is preferable to employ an oil separator from the viewpoint of ensuring the required lubricating properties for the refrigerator because water and the refrigerating machine oil can be separated from each other. As the refrigerating machine oil, standardized products (ISO VG 10 to 100, etc.), which are specified by International Organization for Standardization (ISO), may be used alone or in the form of a mixture. With regard to the material for constituting the refrigerator, piping, etc., it is preferable to use a stainless steel or a material having its surface subjected to anti-corrosive treatment with a view to preventing corrosion by water, the freezing-point depressant, etc.

The refrigerator performs an operation in which a refrigerant gas evaporated in the low-temperature evaporator is compressed in the compressor to form a high-temperature gas, which is then sent to the condenser. If the heat released in the condenser in this refrigerating cycle is used for heating, it is much more economical than heating effected by using an electric heater. The refrigerant composition of the present invention can also be applied to such a heat pump refrigerator. The refrigerant composition can also be applied to a heat pump air conditioner which is capable of both cooling and heating, for example, by a method in which air is cooled by an evaporator installed outdoors and air is heated by a condenser installed indoors. Accordingly, the concept of "refrigerator" in the present invention includes so-called heat pumps which discharge hot air or hot water with well water, air, etc. used as a heat source for the purpose of cooling air, a liquid, a solid, etc.

The refrigerant gas is selected from among a rare gas, e.g. argon (Ar), nitrogen ($N_2$), oxygen ($O_2$), and carbon dioxide ($CO_2$), which are originally present in the air and chemically less reactive and which have a high critical temperature and a high compressor discharge temperature and also provide a high coefficient of refrigerator performance, that is, a high refrigerating capacity. Since the refrigerant gas used in the present invention is a gas present in the air, it has no adverse effect on the human body, does not destroy terrestrial environment, and does not have flammability, explosiveness and odor, as a matter of course.

On the other hand, it is preferable to select a refrigerant gas from among those which are industrially easy to obtain. After required conditions, e.g., a required refrigerating capacity, a type of refrigerator, a refrigeration temperature, etc., have been determined, one or more refrigerant gases are selected from those mentioned above and used alone or in the form of a mixture of a plurality of refrigerant gases. It is preferable to use nitrogen, considering that it has no reactivity and it is industrially easy to obtain and inexpensive. As to water, pure water, which contains no impurities, is used. It is preferable to use pure water produced by passing water through an ion exchange resin or a polymeric membrane or by distillation.

As to the above-described freezing-point depressant, any substance which depresses the freezing point of water by mixing with it may be used. Examples of substances usable as a freezing-point depressant are sodium chloride ($NaCl$), calcium chloride ($CaCl_2$), magnesium chloride ($MgCl_2$), sodium nitrate ($NaNO_3$), ethylene glycol ($HOCH_2 \cdot CH_2OH$), propylene glycol (also known as 1,2-propanediol; $CH_3CH(OH) \cdot CH_2OH$), etc. It is most preferable to use a solution using high-purity sodium chloride ($NaCl$) containing no hypochlorous acid with a view to preventing harm to men and environment and also minimizing corrosion of a metallic material constituting the refrigerator.

The first refrigerant composition preferably consists essentially of 60 to 98% by volume of the refrigerant gas (i.e., gaseous portion), and 2 to 40% by volume of an aqueous depressant solution (i.e., liquid portion), which is a mixture of the water and the freezing-point depressant, under the conditions of ordinary temperature and a pressure of 5 kg/cm$^2$. It should be noted that the aqueous depressant solution is preferably prepared by mixing together 100 parts by weight of water and about 10 to 30 parts by weight of a freezing-point depressant.

The first refrigerant composition is produced by the following steps:

a. the step of initially evacuating a stirring tank of air to produce a vacuum in the stirring tank;

b. the step of previously dissolving the freezing-point depressant in the water to prepare an aqueous depressant solution;

c. the step of injecting the aqueous depressant solution into the stirring tank; and

d. the step of injecting the refrigerant gas liquefied into the stirring tank and stirring it together with the aqueous depressant solution for a predetermined time.

For the production of the first refrigerant composition, the above-described materials are used in the described proportions (by weight) because there is no leakage during the production process. The evacuation step for producing a vacuum in the stirring tank is preferably carried out to produce as high a degree of vacuum as possible, i.e., below $10^{-3}$ Torr. The refrigerant gas that is used in the refrigerant gas stirring step is in the form of a liquefied gas because the above-described constituent materials are treated at low temperature. The reason for the low-temperature treatment is that the mixture is chemically stable when the materials are mixed at low temperature, and that the refrigerant gas can be mixed with the aqueous depressant solution even more uniformly at low temperature, and further that the required pressure is obtained in the stirring tank to ensure the required amount of refrigerant per unit volume. When dissolved in the water while being heated, the freezing-point depressant dissolves even more effectively.

The second refrigerant composition is a refrigerant composition used in a refrigerator having a compressor, a condenser, a receiver, an expansion valve, an evaporator, etc. The second refrigerant composition consists essentially of at least one refrigerant gas selected from among nitrogen, argon, oxygen, and carbon dioxide, which are gaseous at ordinary temperatures, water, a freezing-point depressant for depressing the freezing point of the water by mixing with it, and an alcohol containing at least one polyhydric alcohol for lubricating the refrigerator.

The above-described refrigerator, refrigerant gas, water and freezing-point depressant are essentially the same as those used for the first refrigerant composition.

As to the above-described alcohol, any kind of alcohol, e.g., monohydric alcohols and polyhydric alcohols, can be used. The alcohol preferably contains at least one polyhydric alcohol. It is even more preferable to use a mixture of propylene glycol and ethylene glycol. The reason for using at least one polyhydric alcohol for the above-described alcohol is that polyhydric alcohols are viscous and hence capable of functioning as a depressant for depressing the freezing point of water and also as a lubricating oil for the refrigerator.

The second refrigerant composition preferably consists essentially of 60 to 90% by volume of the refrigerant gas (i.e., gaseous portion), and 10 to 40% by volume of a liquid portion which is a mixture of an aqueous depressant solution, which is a mixture of the water and the freezing-point depressant, and the alcohol, under the conditions of ordinary temperature and a pressure of 5 kg/cm$^2$. The aqueous depressant

4

EP 0 648 825 A1

solution preferably consists essentially of 100 parts by weight of water and about 10 to 33 parts by weight of a freezing-point depressant.

The second refrigerant composition is produced by the following steps:

a. the step of initially evacuating a stirring tank of air to produce a vacuum in the stirring tank;

b. the step of previously dissolving the freezing-point depressant in the water to prepare an aqueous depressant solution;

c. the step of injecting the aqueous depressant solution into the stirring tank;

d. the step of injecting the alcohol into the stirring tank; and

e. the step of injecting the refrigerant gas liquefied into the stirring tank and stirring it together with the aqueous depressant solution and the alcohol for a predetermined time.

For the production of the second refrigerant composition, the above-described materials are used in the described proportions (by weight) because there is no leakage during the production process. The reason for using a liquefied refrigerant gas is as follows: ① the mixture is chemically stable when the materials are mixed at low temperature; ② the aqueous depressant solution and the alcohol can be mixed even more uniformly; and ③ the required pressure is obtained in the stirring tank to ensure the required amount of refrigerant per unit volume. In the other respects, the method of producing the second refrigerant composition is essentially the same as the above-described method of producing the first refrigerant composition. Therefore, restatement thereof is omitted.

The third refrigerant composition is a refrigerant composition used in a refrigerator having a compressor, a condenser, a receiver, an expansion valve, an evaporator, etc. The third refrigerant composition consists essentially of at least one refrigerant gas selected from among nitrogen, argon, oxygen, and carbon dioxide, which are gaseous at ordinary temperatures, water, a freezing-point depressant for depressing the freezing point of the water by mixing with it, and a surface-active agent for forming a film on the surface of a material constituting the refrigerator to prevent corrosion thereof.

The above-mentioned refrigerant gas, water and freezing-point depressant are essentially the same as those used in the first refrigerant composition and hence not described again.

The reason for the third refrigerant composition to contain a surface-active agent is to form a film on the surfaces of ferrous and non-ferrous metals constituting the refrigerator for the purpose of preventing deterioration and corrosion of the inner walls of the refrigerator by the action of the freezing-point depressant, e.g., sodium chloride. The surface-active agent is preferably a nonionic surface-active agent. It is preferable to use a surface-active agent which lowers the surface tension by the surface active function and which is also adhesive and adsorptive to a metallic or non-metallic surface to form the above-described film. That is, it is most preferable to use a surface-active agent which has both the surface tension lowering function and the adhesive or adsorptive function.

More specifically, a phosphate is preferably used as a surface-active agent. Examples of phosphates usable in the present invention include metaphosphates ($M^IPO_3$), diphosphates ($M_2^I P_2O_7$, $M_4^I P_2O_7$), orthophosphates ($M^IH_2PO_4$, $M_2^I HPO_4$, $M_3^I PO_4$), triphosphates ($M_5^I P_3O_{10}$), etc. At least one selected from among these phosphates is used. Phosphates combine with calcium and many other metallic ions to form complex ions, thereby preventing precipitation of metallic salts. Thus, phosphates provide an ion blocking action to prevent corrosion of metals constituting the refrigerator equipment. Among various known phosphates, those which are harmless to men and environment are preferably used. Specific examples of preferable phosphates are as follows:

That is, it is preferable to use sodium phosphates such as trisodium phosphate (also known as tribasic sodium phosphate; $Na_3PO_4$), disodium hydrogenphosphate (also known as dibasic sodium phosphate; $Na_2HPO_4$), sodium dihydrogenphosphate (also known as monobasic sodium phosphate; $NaH_2PO_4$), and sodium hexametaphosphate [$(NaPO_3)_nP_2O_5$].

One of these phosphates may be used alone. Among these phosphates, orthophosphates are particularly preferable to use, which may be used alone. Among orthophosphates, trisodium phosphate ($Na_3PO_4$) is particularly suitably used.

Furthermore, it is possible to use potassium phosphates such as tripotassium phosphate (also known as tribasic potassium phosphate; $KH_3PO_4$), dipotassium hydrogenphosphate (also known as dibasic potassium phosphate; $K_2HPO_4$), and potassium dihydrogenphosphate ($KH_2PO_4$).

It is also possible to use calcium phosphates such as tricalcium phosphate (also known as tribasic calcium phosphate; $Ca_3(PO_4)_2$), calcium hydrogenphosphate (also known as calcium secondary phosphate; $CaHPO_4$), and calcium dihydrogenphosphate (also known as calcium primary phosphate; $Ca(H_2PO_4)_2$).

It is also possible to use iron phosphates such as iron(II) phosphate [$Fe_3(PO_4)_2$], and iron(III) phosphate ($FePO_4$). Alternatively, at least one of the phosphates mentioned above as preferred examples may be mixed with an iron phosphate.

5

The third refrigerant composition preferably consists essentially of 60 to 90% by volume of the refrigerant gas (i.e., gaseous portion), and 10 to 40% by volume of a liquid portion which is a mixture of an aqueous depressant solution, which is a mixture of the water and the freezing-point depressant, and the surface-active agent, under the conditions of ordinary temperature and a pressure of 5 kg/cm$^2$.

The third refrigerant composition is produced by the following steps:

a. the step of initially evacuating a stirring tank of air to produce as high a vacuum as possible in the stirring tank;

b. the step of previously dissolving the freezing-point depressant and the surface-active agent in the water to prepare an aqueous depressant and surfactant solution;

c. the step of injecting the aqueous depressant and surfactant solution into the stirring tank; and

d. the step of injecting the refrigerant gas liquefied into the stirring tank and stirring it together with the aqueous depressant and surfactant solution for a predetermined time.

Preferably, when the aqueous depressant and surfactant solution is produced, the freezing-point depressant and the surface-active agent are dissolved into the water while being heated with a view to promoting dissolution of the surface-active agent and the freezing-point depressant. The reason for using a liquefied refrigerant gas is that the mixture is chemically stable when the materials are mixed at low temperature, and that the aqueous depressant solution and the surface-active agent can be mixed even more uniformly, and further that the required pressure is obtained in the stirring tank to ensure the required amount of refrigerant per unit volume.

In the other respects, the method of producing the third refrigerant composition is essentially the same as the above-described methods of producing the first and second refrigerant compositions. Therefore, restatement thereof is omitted.

The fourth refrigerant composition is a refrigerant composition used in a refrigerator having a compressor, a condenser, a receiver, an expansion valve, an evaporator, etc. The third refrigerant composition consists essentially of at least one refrigerant gas selected from among nitrogen, argon, oxygen, and carbon dioxide, which are gaseous at ordinary temperatures, water, a freezing-point depressant for depressing the freezing point of the water by mixing with it, a surface-active agent for forming a film on the surface of a material constituting the refrigerator to prevent corrosion thereof, and an alcohol containing at least one polyhydric alcohol for lubricating the refrigerator.

The chemical composition of the above-mentioned refrigerant gas, water, freezing-point depressant, alcohol and surface-active agent is essentially the same as those of the first, second and third refrigerant compositions and hence not described again.

The fourth refrigerant composition preferably consists essentially of 60 to 85% by volume of the refrigerant gas (i.e., gaseous portion), and 15 to 40% by volume of a liquid portion which is a mixture of an aqueous depressant solution, which is a mixture of the water and the freezing-point depressant, the surface-active agent and the alcohol, under the conditions of ordinary temperature and a pressure of 5 kg/cm$^2$.

The fourth refrigerant composition is produced by the following steps:

a. the step of initially evacuating a stirring tank of air to produce as high a vacuum as possible in the stirring tank;

b. the step of previously dissolving the freezing-point depressant and the surface-active agent in the water to prepare an aqueous depressant and surfactant solution;

c. the step of injecting the aqueous depressant and surfactant solution into the stirring tank;

d. the step of injecting the alcohol into the stirring tank; and

e. the step of injecting the refrigerant gas liquefied into the stirring tank and stirring it together with the aqueous depressant and surfactant solution and the alcohol for a predetermined time.

The method of producing the fourth refrigerant composition is essentially the same as the methods of producing the first, second and third refrigerant compositions except for the components constituting the fourth refrigerant composition. Therefore, description thereof is omitted.

Orthophosphoric acid in the above-described phosphates combines with the added alcohol to form a phosphate ester. More specifically, hydrogen in the orthophosphoric acid is replaced by a hydrocarbon radical R in the alcohol to form a compound, that is, an inorganic phosphate ester, which is represented by one of the general formulae $PO(OR)_2OH$, $PO(OR)(OH)_2$, and $PO(OR)_3$. Such a phosphate ester has a surface-active action and forms a film on metallic and non-metallic materials constituting the refrigerator by the surface-active action to protect the surfaces of these materials from corrosion.

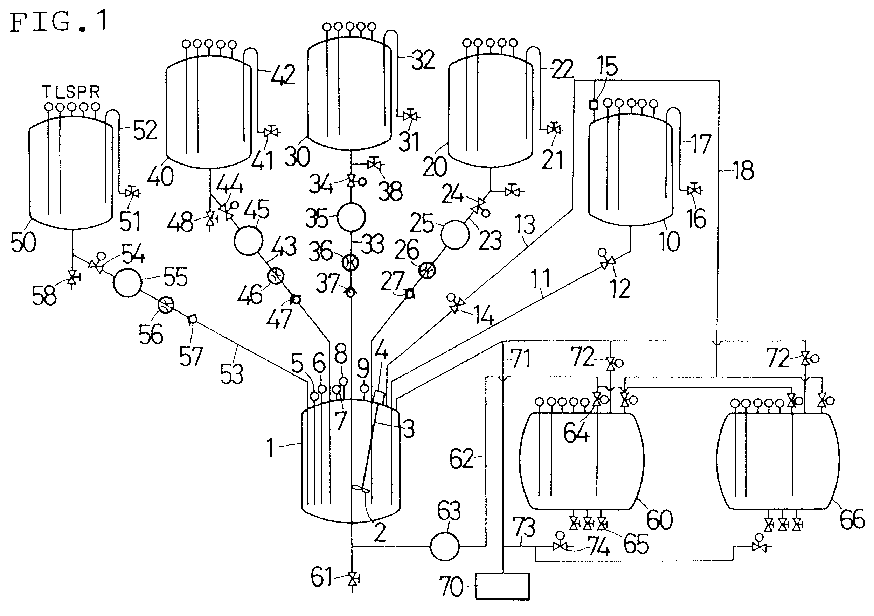

Fig. 1 schematically shows a plant which may be used to produce the refrigerant composition according to the present invention.

Embodiments of the present invention will be described below with reference to the accompanying drawing.

6

Fig. 1 is a conceptual view schematically showing a plant which may be used for production of a refrigerant composition. A stirring tank 1 is a closed tank which can withstand a high degree of vacuum. The stirring tank 1 is formed in an approximately cylindrical shape from a stainless steel to improve the chemical resistance. A stirring element 2 is disposed in the stirring tank 1. The stirring element 2 is secured to the distal end of a shaft 3. The proximal end of the shaft 3 is connected to a motor 4.

Accordingly, by activating the motor 4, the stirring element 2 is rotated, and thus the contents of the stirring tank 1 can be stirred. The top of the stirring tank 1 is provided with a thermometer 5 for measuring the temperature of the contents of the stirring tank 1, a level gauge 6 for externally indicating the liquid level in the stirring tank 1, a safety valve 7 for releasing the gas from the stirring tank 1 into the atmosphere when the pressure in the stirring tank 1 reaches an abnormal pressure level, a pressure gauge 8 for measuring the pressure in the stirring tank 1, and a relief valve 9 for relieving a part or the whole of the gas in the stirring tank 1 to the return side when the pressure in the stirring tank 1 reaches a set value.

A liquid nitrogen tank 10 is used for storing liquid nitrogen. The outer periphery of the liquid nitrogen tank 10 is covered with a double plate to prevent a rise in temperature. The bottom of the liquid nitrogen tank 10 and the top of the stirring tank 1 are connected by a pipe 11. A solenoid valve 12 with a timer is disposed in an intermediate part of the pipe 11. The solenoid valve 12 is capable of opening the valve only for a set time. The stirring tank 1 and the liquid nitrogen tank 10 are also connected by a pipe 13 through a relief valve 15 that is connected to the top of the liquid nitrogen tank 10.

A solenoid valve 14 with a timer is interposed in an intermediate part of the pipe 13. A stop valve 16 is connected to the liquid nitrogen tank 10 through a pipe 17. The stop valve 16 is used when liquid nitrogen transported by a truck with a liquid nitrogen tank is injected into the liquid nitrogen tank 10 for storage. A safety valve, a pressure gauge, a thermometer, etc. are disposed on the top of the liquid nitrogen tank 10 in the same way as in the case of the stirring tank 1.

An aqueous depressant solution tank 20 is used for storing an aqueous solution prepared by mixing together sodium chloride (NaCl), a phosphate as a surface-active agent, and water, that is, an aqueous depressant and surfactant solution. The aqueous depressant and surfactant solution is produced by another production apparatus (not shown) and injected into the aqueous depressant solution tank 20 for storage through a stop valve 21 and a pipe 22. The aqueous depressant solution tank 20 and the stirring tank 1 are connected by a pipe 23. A solenoid valve 24 with a timer, a pump 25, a flowmeter 26, and a check valve 27 are connected to the pipe 23. A stop valve 28 is a drain valve. A safety valve, a pressure gauge, a thermometer, etc., which are necessary for grasping the conditions in the aqueous depressant solution tank 20, are disposed on the top of the tank 20.

A pure water tank 30 is used for storing pure water containing no impurities, which is produced by distillation or using an ion exchange resin. Pure water is produced by a pure water producing apparatus (not shown) using an ion exchange resin and injected into the pure water tank 30 for storage through a stop valve 31 and a pipe 32. The pure water tank 30 and the stirring tank 1 are connected by a pipe 33. A solenoid valve 34 with a timer, a pump 35, a flowmeter 36, and a check valve 37 are connected to the pipe 33. A stop valve 38 is a drain valve. A safety valve, a pressure gauge, a thermometer, etc., which are necessary for grasping the conditions in the pure water tank 30, are disposed on the top of the tank 30.

A propylene glycol tank 40 is used for storing propylene glycol (also known as 1,2-propanediol; $CH_3CH(OH) \cdot CH_2OH$). The propylene glycol is produced in another place and injected into the propylene glycol tank 40 for storage through a stop valve 41 and a pipe 42. The propylene glycol tank 40 and the stirring tank 1 are connected by a pipe 43. A solenoid valve 44 with a timer, a pump 45, a flowmeter 46, and a check valve 47 are connected to the pipe 43. A stop valve 48 is a drain valve. A safety valve, a pressure gauge, a thermometer, etc., which are necessary for grasping the conditions in the propylene glycol tank 40, are disposed on the top of the tank 40.

An ethylene glycol tank 50 is used for storing ethylene glycol, which is also called simply "glycol" ($HOCH_2 \cdot CH_2OH$). The ethylene glycol is produced in another place and injected into the ethylene glycol tank 50 for storage through a stop valve 51 and a pipe 52. The ethylene glycol tank 50 and the stirring tank 1 are connected by a pipe 53. A solenoid valve 54 with a timer, a pump 55, a flowmeter 56, and a check valve 57 are connected to the pipe 53. A stop valve 58 is a drain valve. A safety valve, a pressure gauge, a thermometer, etc., which are necessary for grasping the conditions in the ethylene glycol tank 50, are disposed on the top of the tank 50.

A refrigerant composition storage tank 60 is used for storing the refrigerant composition produced in the stirring tank 1. The refrigerant composition produced in the stirring tank 1 is sent to the refrigerant composition storage tank 60 for storage by a pump 63 through a stop valve 61, a pipe 62 and a solenoid valve 64. A plurality of stop valves 65 are used to charge the refrigerant composition into small-sized cylinders for transport. A safety valve, a pressure gauge, a thermometer, etc., which are necessary for

7

grasping the conditions in the refrigerant composition storage tank 60, are disposed on the top of the tank 60. Another refrigerant composition storage tank 66 has a similar structure to that of the refrigerant composition storage tank 60. Therefore, description thereof is omitted.

A vacuum pump 70 is connected to the stirring tank 1, the liquid nitrogen tank 10, the refrigerant composition storage tank 60 and the refrigerant composition storage tank 66 through a pipe 71 to evacuate these tanks to produce a vacuum therein. In addition, solenoid valves 72 are respectively interposed between the pipe 71 and the refrigerant composition storage tank 60 and between the pipe 71 and the refrigerant composition storage tank 66, thereby enabling the vacuum pump 70 and the refrigerant composition storage tanks 60 and 66 to be temporarily disconnected from each other. A solenoid valve 74 is connected to the distal end of a pipe 73 that is branched from the pipe 71. The solenoid valve 74 is used to evacuate a transport container (not shown) of air.

The first refrigerant composition is produced by the above-described production plant roughly in the following sequence. However, in the production of the first refrigerant composition, the aqueous solution in the tank 20 is different from that described above in connection with the production plant. That is, in this example, no surface-active agent is added to the tank 20. Further, neither the propylene glycol tank 40 nor the ethylene glycol tank 50 is used in this example. The process sequence for producing the first refrigerant composition is as follows:

(1) The stirring tank 1 is evacuated to produce a vacuum lower than $10^{-3}$ Torr therein.

(2) 30 parts by weight of sodium chloride (NaCl) and 100 parts by weight of pure water are previously mixed together while being heated at about 80°C so that the former is dissolved in the latter, thereby preparing an aqueous sodium chloride solution. The resulting aqueous solution is stored in the tank 20.

(3) 30 parts by weight of the aqueous sodium chloride solution is injected into the stirring tank 1, and liquid nitrogen is injected into the stirring tank 1 little by little. The mixture is stirred for about 2 hours by the operation of the stirring element 2.

(4) In addition, 2 parts by weight of pure water is injected into the stirring tank 1.

(5) The stirring element 2 is further driven to stir the mixture continuously for about 4 hours. Thus, the production of the first refrigerant composition is completed.

(6) The pump 63 is activated to transfer the produced refrigerant composition to the storage tanks 60 and 66.

The first refrigerant composition produced in this example had the following components. It should be noted that in the following expression of "30 parts by weight of aqueous sodium chloride solution", the solution contains 30 parts by weight of sodium chloride and 100 parts by weight of pure water. None of the components added, except nitrogen, leaked during the production process. The first refrigerant composition had the following components. It should be noted that the volume of each component of the refrigerant as shown below is the volume thereof in a cylinder under the conditions of ordinary temperature and a pressure of 5 kg/cm$^2$.

| a. Nitrogen | balance (gas portion) |
|---|---|
| b. Aqueous sodium chloride solution | 32% by volume (overall volume of liquid portion) |

The first refrigerant composition has the following properties:
Hue:        transparent
Form:       liquid and gas, nonionic
pH:         6.8 to 7.5 (liquid phase)

The second refrigerant composition is produced by the above-described production plant roughly in the following sequence. However, in the production of the second refrigerant composition, the aqueous solution in the tank 20 is different from that described above in connection with the production plant. That is, in this example, no surface-active agent is added to the tank 20. The process sequence for producing the second refrigerant composition is as follows:

(1) The stirring tank 1 is evacuated to produce a vacuum lower than $10^{-3}$ Torr therein.

(2) 30 parts by weight of sodium chloride (NaCl) and 100 parts by weight of pure water are previously mixed together while being heated at about 80°C so that the former is dissolved in the latter, thereby preparing an aqueous sodium chloride solution. The resulting aqueous solution is stored in the tank 20.

(3) 26 parts by weight of the aqueous sodium chloride solution is injected into the stirring tank 1, while 1 part by weight of pure water is injected into the stirring tank 1 from the pure water tank 30.

(4) Further, 6 parts by weight of ethylene glycol and 2 parts by weight of propylene glycol are added to the stirring tank 1, and the mixture is stirred for more than 20 minutes by the operation of the stirring element 2. At this time, the temperature in the stirring tank 1 is about -60ºC.

(5) In addition, liquid nitrogen is injected into the stirring tank 1 little by little, and the mixture is stirred for about 1 hour by the operation of the stirring element 2. At this time, the pressure in the stirring tank 1 is about 6 kg/cm$^2$ and the temperature in the tank 1 is about -70 to -80ºC.

(6) In addition, 1 part by weight of pure water is injected into the stirring tank 1, and the mixture is stirred for some time by the operation of the stirring element 2.

(7) The stirring element 2 is further driven to stir the mixture continuously for about 4 hours. Thus, the production of the second refrigerant composition is completed.

(8) The pump 63 is activated to transfer the produced refrigerant composition to the storage tanks 60 and 66.

The second refrigerant composition produced in this example had the following components. It should be noted that in the following expression of "26 parts by weight of aqueous sodium chloride solution", the solution contains 30 parts by weight of sodium chloride and 100 parts by weight of pure water. None of the components added, except nitrogen, leaked during the production process.

```
a. Nitrogen                              ...balance
                                         (gas portion)

b. Aqueous sodium chloride solution ⎫    ...36% by volume
                                    ⎪
c. Water                            ⎪    (overall volume
                                    ⎬
d. Ethylene glycol                  ⎪    of liquid
                                    ⎪
e. Propylene glycol                 ⎭    portion)
```

It should be noted that the volume of each component of the refrigerant as shown above is the volume thereof in a cylinder under the conditions of ordinary temperature and a pressure of 5 kg/cm$^2$.

The second refrigerant composition has the following properties:

Hue:      transparent
Form:     liquid and gas, nonionic
pH:       7.0 to 7.5 (liquid phase)

The third refrigerant composition is produced by the above-described production plant roughly in the following sequence:

(1) The stirring tank 1 is evacuated to produce a vacuum lower than $10^{-3}$ Torr therein.

(2) 3 parts by weight of trisodium phosphate ($Na_3PO_4$) is previously dissolved in about 8 parts by weight of an aqueous sodium chloride solution, which has been prepared by mixing together 30 parts by weight of sodium chloride and 100 parts by weight of pure water, and the resulting mixture is stirred by the stirring element 2 for about 20 minutes while being heated at about 80ºC, thereby preparing an aqueous sodium chloride and trisodium phosphate solution.

(3) About 8 parts by weight of the aqueous sodium chloride and trisodium phosphate solution is injected into the stirring tank 1, and liquid nitrogen is injected into the stirring tank 1 little by little. The resulting mixture is stirred for about 1 hour by the operation of the stirring element 2. At this time, the temperature in the stirring tank 1 is about -70 to -80ºC, and the pressure in the tank 1 is about 6 kg/cm$^2$.

(4) In addition, 1 part by weight of pure water is injected into the stirring tank 1, and the mixture is stirred for about 20 minutes.

(5) The stirring element 2 is further driven to stir the mixture continuously for about 4 hours. Thus, the production of the third refrigerant composition is completed.

(6) The pump 63 is activated to transfer the third refrigerant composition to the storage tanks 60 and 66.

The third refrigerant composition produced in this example had the following components. It should be noted that in the following expression of "8 parts by weight of aqueous sodium chloride solution", the solution contains 30 parts by weight of sodium chloride and 100 parts by weight of pure water. None of the components added, except nitrogen, leaked during the production process.

```
a.  Nitrogen                                    ...balance

                                                (gas portion)

b.  Aqueous sodium chloride solution  ⎫  12% by volume
                                      ⎬
c.  Water                             ⎪  (overall volume of
                                      ⎭
d.  Trisodium phosphate (Na₃PO₄)          liquid portion)
```

It should be noted that the volume of each component of the refrigerant as shown above is the volume thereof in a cylinder under the conditions of ordinary temperature and a pressure of 5 $kg/cm^2$.

The third refrigerant composition has the following properties:

Hue:      transparent
Form:     liquid and gas, nonionic
pH:       $8\pm0.1$ (liquid phase)
Odor:     slightly smells

The fourth refrigerant composition is produced by the above-described production plant roughly in the following sequence:

(1) The stirring tank 1 is evacuated to produce a vacuum lower than $10^{-3}$ Torr therein.

(2) 3 parts by weight of trisodium phosphate ($Na_3PO_4$) is previously dissolved in about 8 parts by weight of an aqueous sodium chloride solution, which has been prepared by mixing together 30 parts by weight of sodium chloride and 100 parts by weight of pure water, and the resulting mixture is stirred by the stirring element 2 for about 20 minutes while being heated at about 80°C, thereby preparing an aqueous sodium chloride and trisodium phosphate solution. The resulting aqueous solution is stored in the tank 20.

(3) 11 parts by weight of the aqueous sodium chloride and trisodium phosphate solution, 3 parts by weight of ethylene glycol, and 5 parts by weight of propylene glycol are injected into the stirring tank 1, and the mixture is stirred for about 1 hour.

(4) In addition, liquid nitrogen is injected into the stirring tank 1 little by little, and the motor 4 is activated to drive the stirring element 2, thereby stirring the mixture for about 1 hour. At this time, the temperature in the stirring tank 1 is about -70 to -80°C, and the pressure in the tank 1 is about 6 $kg/cm^2$.

(5) In addition, 1 part by weight of pure water is injected into the stirring tank 1, and the mixture is stirred for about 20 minutes by the operation of the stirring element 2.

(6) The stirring element 2 is further driven to stir the mixture continuously for about 4 hours. Thus, the production of the fourth refrigerant composition is completed.

(7) The pump 63 is activated to transfer the fourth refrigerant composition to the storage tanks 60 and 66.

The fourth refrigerant composition produced in this example had the following components. It should be noted that in the following expression of "8 parts by weight of aqueous sodium chloride solution", the solution contains 30 parts by weight of sodium chloride and 100 parts by weight of pure water. None of the components added, except nitrogen, leaked during the production process.

(i) Example 1 of Fourth Refrigerant Composition

```
a.  Nitrogen                                    ...balance

                                                (gas portion)

b.  Aqueous sodium chloride solution  ⎫
                                      ⎪
c.  Water                             ⎪  20% by volume
                                      ⎪
d.  Ethylene glycol                   ⎬  (overall volume
                                      ⎪
e.  Propylene glycol                  ⎪  of liquid
                                      ⎪
f.  Trisodium phosphate (Na₃PO₄)      ⎪  portion)
                                      ⎪
g.  Phosphate ester                   ⎭
```

It should be noted that the volume of each component of the refrigerant as shown above is the volume thereof in a cylinder under the conditions of ordinary temperature and a pressure of 5 kg/cm$^2$.

The refrigerant composition of Example 1 has the following properties:

Hue: transparent
Form: liquid and gas, nonionic
pH: 8±0.1 (liquid phase)
Odor: slightly smells

The following refrigerant composition was also produced by the above-described method.

(ii) Example 2 of Fourth Refrigerant Composition

a. Nitrogen ...balance (gas portion)

b. Sodium chloride

c. Water

d. Ethylene glycol

e. Propylene glycol

f. Trisodium phosphate ($Na_3PO_4$)

g. Phosphate ester

25% by volume (overall volume of liquid portion)

It should be noted that the volume of each component of the refrigerant as shown above is the volume thereof in a cylinder under the conditions of ordinary temperature and a pressure of 5 kg/cm$^2$.

The refrigerant composition of Example 2 has essentially the same properties as those of Example 1.

As has been described above, the refrigerant composition of the present invention has functions and conditions adequate to serve as a refrigerant, although it is slightly inferior to Freon refrigerants in terms of refrigerating capacity. Thus, the refrigerant composition of the present invention provides the following advantageous effects:

(a) The evaporating temperature from the atmosphere is low; (b) the condensing pressure is low; (c) the latent heat of vaporization is large in quantity; (d) the freezing point is low; (e) the specific volume is large; (f) the critical temperature is high; (g) the refrigerant composition will not chemically react with a refrigerating machine oil; (h) the viscosity is low, and heat transfer is favorably effected; (i) the refrigerant composition has good electrical insulating properties and does not corrode an electrical insulating substance; (j) it has neither flammability nor explosiveness; (k) it is harmless to men and environment; and (l) it can be used in refrigerators originally designed to use a Freon refrigerant as it is without the need of remodeling them.

## Claims

1. A refrigerant composition used in a refrigerator having a compressor, a condenser, a receiver, an expansion valve, an evaporator, etc., said refrigerant composition comprising:
   at least one refrigerant gas selected from among nitrogen, argon, oxygen, and carbon dioxide, which are gaseous at ordinary temperatures;
   water; and
   a freezing-point depressant for depressing a freezing point of said water by mixing with it.

2. A refrigerant composition according to Claim 1, wherein said freezing-point depressant is sodium chloride.

3. A refrigerant composition according to Claim 1, which consists essentially of 2 to 40% by volume of an aqueous depressant solution, which is a mixture of said water and said freezing-point depressant, and

11

the balance which is said refrigerant gas, under conditions of ordinary temperature and a pressure of 5 kg/cm$^2$.

4. A method of producing the refrigerant composition of Claim 1, said method comprising the steps of:
   a. initially evacuating a stirring tank of air to produce a vacuum in said stirring tank;
   b. previously dissolving said freezing-point depressant in said water to prepare an aqueous depressant solution;
   c. injecting said aqueous depressant solution into said stirring tank; and
   d. injecting said refrigerant gas liquefied into said stirring tank and stirring it together with said aqueous depressant solution for a predetermined time.

5. A refrigerant composition used in a refrigerator having a compressor, a condenser, a receiver, an expansion valve, an evaporator, etc., said refrigerant composition comprising:
   at least one refrigerant gas selected from among nitrogen, argon, oxygen, and carbon dioxide, which are gaseous at ordinary temperatures;
   water;
   a freezing-point depressant for depressing a freezing point of said water by mixing with it; and
   an alcohol containing at least one polyhydric alcohol for lubricating said refrigerator.

6. A refrigerant composition according to Claim 5, which consists essentially of 10 to 40% by volume of a liquid portion which is a mixture of an aqueous depressant solution, which is a mixture of said water and said freezing-point depressant, and said alcohol, and the balance which is said refrigerant gas, under conditions of ordinary temperature and a pressure of 5 kg/cm$^2$.

7. A method of producing the refrigerant composition of Claim 5, said method comprising the steps of:
   a. initially evacuating a stirring tank of air to produce a vacuum in said stirring tank;
   b. previously dissolving said freezing-point depressant in said water to prepare an aqueous depressant solution;
   c. injecting said aqueous depressant solution into said stirring tank;
   d. injecting said alcohol into said stirring tank; and
   e. injecting said refrigerant gas liquefied into said stirring tank and stirring it together with said aqueous depressant solution and said alcohol for a predetermined time.

8. A refrigerant composition used in a refrigerator having a compressor, a condenser, a receiver, an expansion valve, an evaporator, etc., said refrigerant composition comprising:
   at least one refrigerant gas selected from among nitrogen, argon, oxygen, and carbon dioxide, which are gaseous at ordinary temperatures;
   water;
   a depressant for depressing a freezing point of said water by mixing with it; and
   a surface-active agent for forming a film on a surface of a material constituting said refrigerator to prevent corrosion thereof.

9. A refrigerant composition according to Claim 8, wherein said surface-active agent contains at least a phosphate.

10. A refrigerant composition according to Claim 8, which consists essentially of 10 to 40% by volume of a liquid portion which is a mixture of an aqueous depressant solution, which is a mixture of said water and said freezing-point depressant, and said surface-active agent, and the balance which is said refrigerant gas, under conditions of ordinary temperature and a pressure of 5 kg/cm$^2$.

11. A method of producing the refrigerant composition of Claim 8, said method comprising the steps of:
   a. initially evacuating a stirring tank of air to produce as high a vacuum as possible in said stirring tank;
   b. previously dissolving said freezing-point depressant and said surface-active agent in said water to prepare an aqueous depressant and surfactant solution;
   c. injecting said aqueous depressant and surfactant solution into said stirring tank; and
   d. injecting said refrigerant gas liquefied into said stirring tank and stirring it together with said aqueous depressant and surfactant solution for a predetermined time.

12

**12.** A refrigerant composition used in a refrigerator having a compressor, a condenser, a receiver, an expansion valve, an evaporator, etc., said refrigerant composition comprising:

at least one refrigerant gas selected from among nitrogen, argon, oxygen, and carbon dioxide, which are gaseous at ordinary temperatures;

water;

a depressant for depressing a freezing point of said water by mixing with it;

a surface-active agent for forming a film on a surface of a material constituting said refrigerator to prevent corrosion thereof; and

an alcohol containing at least one polyhydric alcohol for lubricating said refrigerator.

**13.** A method of producing the refrigerant composition of Claim 12, said method comprising the steps:

a. initially evacuating a stirring tank of air to produce as high a vacuum as possible in said stirring tank;

b. previously dissolving said freezing-point depressant and said surface-active agent in said water to prepare an aqueous depressant and surfactant solution;

c. injecting said aqueous depressant and surfactant solution into said stirring tank;

d. injecting said alcohol into said stirring tank; and

e. injecting said refrigerant gas liquefied into said stirring tank and stirring it together with said aqueous depressant and surfactant solution and said alcohol for a predetermined time.

**14.** A refrigerant composition according to Claim 12, which consists essentially of 15 to 40% by volume of a liquid portion which is a mixture of said aqueous depressant solution, which is a mixture of said water and said freezing-point depressant, said surface-active agent and said alcohol, and the balance which is said refrigerant gas, under conditions of ordinary temperature and a pressure of 5 kg/cm$^2$.

FIG.1

TLSPR

EP 0 648 825 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 579 485 (OHO)<br>* the whole document * | 1-14 | C09K5/04 |
| A | DATABASE WPI<br>Section PQ, Week 9038,<br>Derwent Publications Ltd., London, GB;<br>Class Q75, AN 90-288637<br>& SU-A-1 545 046 (LENGD REFRIG IND) 23 February 1990<br>* abstract * | 1-14 | |
| A | DATABASE WPI<br>Section Ch, Week 8539,<br>Derwent Publications Ltd., London, GB;<br>Class D13, AN 85-241546<br>& SU-A-1 143 950 (ATLANTIC FISH ECON) 7 March 1985<br>* abstract * | 1-14 | |
| A | EP-A-0 081 645 (MESSER GRIESHEIM)<br>* abstract; claims 1,2 * | 1-14 | **TECHNICAL FIELDS SEARCHED** (Int.Cl.6)<br><br>C09K |

The present search report has been drawn up for all claims

| Place of search | Date of completion of the search | Examiner |
|---|---|---|
| THE HAGUE | 20 December 1994 | Nicolas, H |